# EUROPEAN PATENT APPLICATION

(11) **EP 4 266 224 A1**
(43) Date of publication of application: **25.10.2023**
(21) Application number: 22169333.6
(22) Date of filing: 21.04.2022
(51) Int. Cl.: G06Q 10/06, G06Q 10/10

(54) **A SYSTEM AND METHOD FOR USING NON-FOCUS MEETING PERIODS TO INCREASE PRODUCTIVITY**

(71) Applicant: Nokia Technologies Oy, 02610 Espoo (FI)
(72) Inventor: CONSTANTINIDES, Marios, CAMBRIDGE, CB4 1EH (GB); QUERCIA, Daniele, London, SW16 3HZ (GB); ZHOU, Ke, Cambridge, CB1 3DQ (GB)
(74) Representative: Sayer, Robert David

(57) **Abstract**

An apparatus, method and computer program is described comprising: providing a personalised To-Do list for each of a plurality of participants of a virtual meeting or presentation; receiving a plurality of interaction inputs for one or more of a plurality of time periods of the virtual meeting or presentation from one or more of the participants of the virtual meeting or presentation; determining, for each time period, one or more participants to allocate to a non-focus group based, at least partially, on one or more of the plurality of interaction inputs; and providing each of the one or more participants of the non-focus group with the personalised To-Do list for that participant.

## Description

### Field

The present specification relates to virtual meetings or presentations, and in particular, to increasing productivity of participants who may choose to shift their attention away from the virtual meeting or presentation.

### Background

Virtual meetings or presentations are known. There remains a need for further improvements related to interaction between participants and utilisation of participants in non-focus periods of virtual meetings or presentations.

### Summary

In a first aspect, this specification provides an apparatus comprising means for performing: providing a personalised To-Do list for each of a plurality of participants of a virtual meeting or presentation; receiving a plurality of interaction inputs for one or more of a plurality of time periods of the virtual meeting or presentation from one or more of the participants of the virtual meeting or presentation; determining, for each time period, one or more participants to allocate to a non-focus group based, at least partially, on one or more of the plurality of interaction inputs; and providing each of the one or more participants of the non-focus group with the personalised To-Do list for that participant.

Some examples include means for performing receiving an input from at least one of the one or more participants of the non-focus group indicating an intent corresponding to at least one task included in the personalised To-Do list of that participant.

In some examples, the intent includes one or more of: starting a task; pausing a task, and completing a task.

Some examples include means for performing saving audio data of the virtual meeting or presentation for each participant of the non-focus group.

In some examples, for each participant of the non-focus group, saving the audio data starts when the participant is allocated to the non-focus group and stops when the participant is allocated to a focus group.

In some examples, saving the audio data starts in response to an input from the participant indicating an intent to start a task and stops in response to an input from the participant indicating an intent to pause a task and/or complete a task.

Some examples include means for performing determining, for each time period, one or more participants of the virtual meeting or presentation to allocate to a focus group based, at least partially, on one or more of the plurality of interaction inputs; and preventing the one or more participants of the focus group from receiving the personalised To-Do list.

In some examples, the performing further comprises for each time period, if it determined that one or more participants of the non-focus group is allocated to the focus group, notifying the one or more participants that they have been allocated to the focus group.

Some examples include means for performing prompting the one or more participants of the non-focus group allocated to the focus group to provide an input indicating that the task is paused or completed.

In some examples, determining the one or more participants to allocate to the focus group is based, at least partially, on whether a number and/or type of the plurality of interaction inputs received for a participant is equal to or above a threshold.

In some examples, determining the one or more participants to allocate to the non-focus group is based, at least partially, on whether a number and/or type of the plurality of interaction inputs received for a participant is below a threshold.

Some examples include means for performing, when the virtual meeting or presentation is finished providing, to each of the one or more participants, a summary of the virtual meeting or presentation.

In some examples, the summary comprises a personalised To-Do list based, at least partially, on an updated To-Do list for the participant and/or an agenda of the virtual meeting or presentation.

In some examples, the summary further comprises a global To-Do list for the virtual meeting or presentation based, at least partially, on an updated personalised To-Do list for one or more of the participants and/or an agenda of the virtual meeting or presentation.

In some examples, for the one or more participants of the non-focus group, the summary further comprises the audio data.

In some examples, the audio data comprises audio data from at least one of the plurality of time periods.

Some examples include means for performing updating one or more personalised To-Do lists in response to receiving from the one or more participants of the virtual meeting or presentation inputs indicating tasks that are started, in progress, completed or new tasks.

In some examples, the interaction inputs comprise at least one of: speaking time of the one or more participants, and body movement of the one or more participants.

In some examples, the body movement of the one or more participants comprises one or more of: eye movement; hand movement; head movement; posture change; and heart rate.

Some examples include means for performing extracting meeting information from an agenda and/or a calendar invitation of the virtual meeting or presentation.

In some examples, the determining, for each time period, the one or more participants to allocate to the non-focus group is further based on the meeting information.

In some examples, the meeting information comprises one or more of: a type of the virtual meeting or presentation; a duration of the virtual meeting or presentation; items of the agenda of the virtual meeting or presentation; tasks and/or participants corresponding to the items of the agenda; and a role of each participant in the virtual meeting or presentation.

The means may comprise: at least one processor; and at least one memory including computer program code, the at least one memory and the computer program configured, with the at least one processor, to cause the performance of the apparatus.

In a second aspect, this specification describes a method comprising: providing a personalised To-Do list for each of a plurality of participants of a virtual meeting or presentation; receiving a plurality of interaction inputs for one or more of a plurality of time periods of the virtual meeting or presentation from the one or more participants of the virtual meeting or presentation; determining, for each time period, one or more participants to allocate to a non-focus group based, at least partially, on one or more of the plurality of interaction inputs; and providing each of the one or more participants of the non-focus group with the personalised To-Do list for that participant.

Some examples may further comprise receiving an input from at least one of the one or more participants of the non-focus group indicating an intent corresponding to at least one task included in the personalised To-Do list of that participant.

Some examples may further comprise saving audio data of the virtual meeting or presentation for each participant of the non-focus group.

In some examples, for each participant of the non-focus group, saving the audio data starts when the participant is allocated to the non-focus group and stops when the participant is allocated to a focus group.

In some examples, saving the audio data starts in response to an input from the participant indicating an intent to start a task and stops in response to an input from the participant indicating an intent to pause a task and/or complete a task.

Some examples may further comprise determining, for each time period, one or more participants of the virtual meeting or presentation to allocate to a focus group based, at least partially, on one or more of the plurality of interaction inputs; and preventing the one or more participants of the focus group from receiving the personalised To-Do list.

Some examples may further comprise for each time period, if it determined that one or more participants of the non-focus group is allocated to the focus group, notifying the one or more participants that they have been allocated to the focus group.

Some examples may further comprise prompting the one or more participants of the non-focus group allocated to the focus group to provide an input indicating that the task is paused or completed.

In some examples, determining the one or more participants to allocate to the focus group is based, at least partially, on whether a number and/or type of the plurality of interaction inputs received for a participant is equal to or above a threshold.

In some examples, determining the one or more participants to allocate to the non-focus group is based, at least partially, on whether a number and/or type of the plurality of interaction inputs received for a participant is below a threshold.

Some examples may further comprise performing, when the virtual meeting or presentation is finished providing, to each of the one or more participants, a summary of the virtual meeting or presentation.

Some examples may further comprise updating one or more personalised To-Do lists in response to receiving from the one or more participants of the virtual meeting or presentation inputs indicating tasks that are started, in progress, completed or new tasks.

Some examples may further comprise means for performing extracting meeting information from an agenda and/or a calendar invitation of the virtual meeting or presentation.

In some examples, the determining, for each time period, the one or more participants to allocate to the non-focus group is further based on the meeting information.

In a third aspect, this specification describes an apparatus configured to perform any method as described with reference to the second aspect.

In a fourth aspect, this specification describes computer-readable instructions which, when executed by a computing apparatus, cause the computing apparatus to perform any method as described with reference to the second aspect.

In a fifth aspect, this specification describes a computer program comprising instructions for causing an apparatus to perform at least the following: providing a personalised To-Do list for each of a plurality participants of a virtual meeting or presentation; receiving a plurality of interaction inputs for one or more of a plurality of time periods of the virtual meeting or presentation from the one or more participants of the virtual meeting or presentation; determining, for each time period, one or more participants to allocate to a non-focus group based, at least partially, on one or more of the plurality of interaction inputs; and providing each of the one or more participants of the non-focus group with the personalised To-Do list for that participant.

In a sixth aspect, this specification describes a computer-readable medium (such as a non-transitory computer-readable medium) comprising program instructions stored thereon for performing (at least) any method as described with reference to the second aspect.

In a seventh aspect, this specification describes an apparatus comprising: at least one processor; and at least one memory including computer program code which, when executed by the at least one processor, causes the apparatus to perform (at least) any method as described with reference to the second.

In an eighth aspect, this specification describes an apparatus comprising a first module (such as a processor or some other means) configured to provide a personalised To-Do list for each of a plurality of participants of a virtual meeting or presentation; a second module (such as a processor or some other means) configured to receive a plurality of interaction inputs for one or more of a plurality of time periods of the virtual meeting or presentation from one or more of the participants of the virtual meeting or presentation; a third module (such as a processor or some other means) configured to determine, for each time period, one or more participants to allocate to a non-focus group based, at least partially, on one or more of the plurality of interaction inputs; and a fourth module (such as a processor or some other means) configured to provide each of the one or more participants of the non-focus group with the personalised To-Do list for that participant.

### Brief description of the drawings

Example embodiments will now be described, by way of non-limiting examples, with reference to the following schematic drawings, in which:
FIG. 1 is a diagram of a system in accordance with an embodiment;
FIG. 2 is a block diagram of a system in accordance with an embodiment;
FIGs. 3 and 4 are flow charts of algorithms, in accordance with embodiments;
FIG. 5 is a block diagram of a plurality of interaction inputs;
FIG. 6 is a flow chart of an algorithm in accordance with an embodiment;
FIG. 7 is a schematic diagram of a visual representation of a personalised To-Do list in accordance with an embodiment;
FIG. 8 is a schematic diagram of audio data in accordance with an embodiment;
FIG. 9 is a block diagram of meeting information in accordance with an embodiment;
FIG. 10 is a block diagram of a Summary in accordance with an embodiment;
FIG. 11 is a schematic diagram of a visual representation of the Summary in accordance with an embodiment;
FIG. 12 is a block diagram of a system in accordance with an embodiment;
FIG. 13 is a block diagram of a system in accordance with an embodiment; and
FIGs. 14A and 14B show tangible media respectively a removable memory unit 410 and a compact disc (CD) 420, storing computer-readable code which when run by a computer may perform methods according to embodiments.

### Detailed description

The scope of protection sought for various embodiments of the invention is set out by the independent claims. Embodiments and features, if any, described in the specification that do not fall under the scope of the independent claims are to be interpreted as examples useful for understanding various embodiments of the invention.

In the description and drawings, like reference numerals refer to like elements throughout.

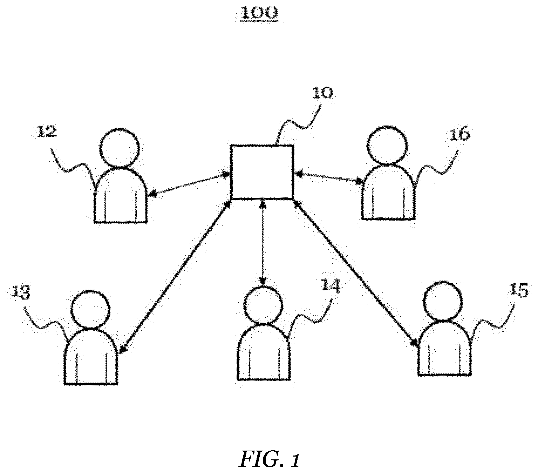

FIG. 1 is a schematic diagram of a system, indicated generally by the reference numeral 100, in accordance with an embodiment. System 100 comprises a plurality of participants 12 to 16 participating in a virtual meeting or presentation using, for example, a module 10. For example, the module 10 may be a server (e.g. a server for a video-conferencing tool) for enabling communication between the plurality of participants 12 to 16. The module 10 may include one or more modules. One or more of the plurality of participants 12 to 16 may be a host (e.g. organizers, hosts, or speakers) of the virtual meeting or presentation and one or more of the other participants may be attendees of the virtual meeting or presentation. The plurality of participants 12 to 16 may communicate by sending and/or receiving data through the module 10. The participants may sending and/or receiving data directly and/or indirectly through the module 10. For example, the data may include one or more of text data, video data, and audio data, but may equally well include any data suitable for, or applicable to, the virtual meeting or presentation. The data may also include information indicative of the focus or behaviour of the participant, as discussed below. The terms meeting, virtual meeting, and presentation are used interchangeably in the following disclosure.

In virtual meetings, participants might feel less involved in some parts of the meeting than others. In other words, they may not be focused on the virtual meeting or presentation for the whole duration of the meeting. For example, this could occur when an agenda for the meeting includes multiple items, but not all of the items are relevant to all of the participants. For instance, items on the agenda may relate to different projects, topics, work items or subject matter that are only relevant to some of the participants. As a result, participants may be unable to, or may choose not to, contribute to, or actively participate in, the whole of the meeting (e.g. there may not be a need for every participant to contribute to every item on the agenda). Hence, participants may choose to shift their attention away from the virtual meeting or presentation, so they are not focused on the virtual meeting or presentation.

Alternatively and/or additionally, participants may be less involved if they choose to shift their attention away from the virtual meeting or presentation in order to multi-task. For examples, if participants have a high work load then they may try complete other work whilst also attending the meeting. In other words, participants may try to multi-task during the virtual meeting or presentation. In addition, participants may be less involved if they choose to shift their attention away from the virtual meeting or presentation because they are experiencing meeting fatigue. The occurrence of meeting fatigue is particularly applicable to meetings or presentations that are held virtually. Some embodiments presented herewith allow for one or more periods of non-focus time for participants in order to alleviate the problem of meeting fatigue and negative multi-tasking during meetings. This may allow for effective utilisation of participants during non-focus periods (non-focus time) and further increase the overall productivity of a team and/or project(s).

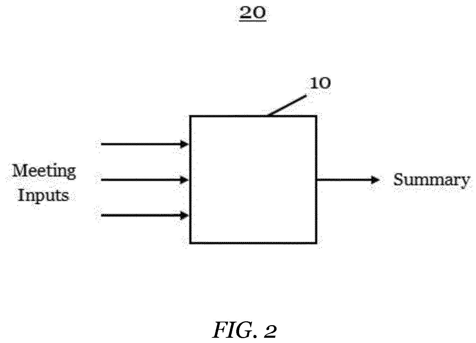

FIG. 2 is a block diagram of the system 100, indicated generally by a reference numeral 20, in accordance with an embodiment. The module 10 is configured to receive a plurality of meeting inputs and generate a Summary. The module 10 receives the plurality of meeting inputs from one or more participants (e.g. one or more of the participants 12 to 16). The module 10 provides a Summary of the meeting that is output for each of the plurality of participants of the virtual meeting or presentation. The meeting inputs may include any inputs relevant to the meeting. For example, the meeting inputs may include interaction information from participants and optionally meeting information provided by a host and/or a participant, and/or from an agenda of the meeting. The meeting information may be provided prior to and/or during the meeting. The Summary may include a personalised To-Do list. The Summary may additionally include, for example, one or more of a global To-Do list, the meeting agenda, audio data, and video data. This is not exhaustive and other information may also be provided.

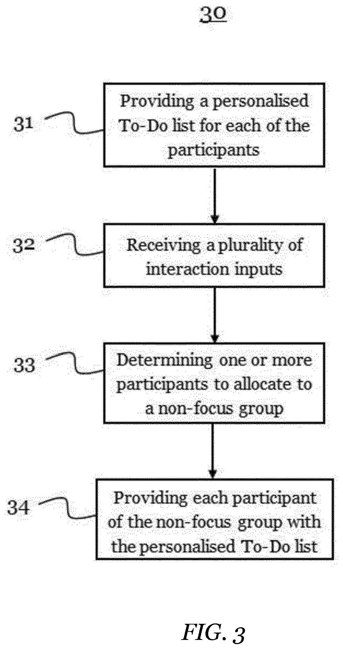

FIG. 3 is a flow chart of an algorithm, indicated generally by a reference numeral 30, in accordance with an embodiment of the system 100.

At operation 31, the module 10 provides a personalised To-Do list for each of a plurality of participants of a virtual meeting or presentation. For example, the module 10 may generate (e.g. create) a personalised To-Do list for each participant. Alternatively, the module 10 may receive a personalised To-Do list for each participant from another source. The personalised To-Do list represents a To-Do list for a particular participant of the meeting. For example, the personalised To-Do list may include tasks or action items from the meeting that are associated with the participant (e.g. tasks that the participant is responsible for doing or managing). The personalised To-Do list may also include general information regarding the meeting and/or agenda. For example, the contents of the personalised To-Do list may include information from an agenda for the virtual meeting or presentation, a calendar invitation for the virtual meeting or presentation, emails, and the like. Alternatively or additionally, contents of the personalised To-Do list may be provided (e.g. created, edited, updated) by the host and/or participants of the meeting. The contents of the personalised To-Do list may be provided prior to and/or during the meeting.

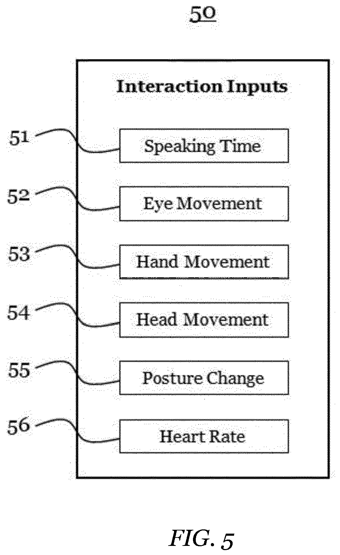

At operation 32, the module 10 receives a plurality of interaction inputs for one or more of a plurality of time periods of the virtual meeting or presentation from one or more of the participants of the virtual meeting or presentation (e.g. one or more of the participants 12 to 16). A time period of the virtual meeting or presentation may indicate a part (e.g. audio part and/or video part) of the virtual meeting or presentation, for example, generated by segmentation of the audio and/or video with respect to time. In one example, the video may comprise visual data such as screen sharing, images of participants or the like. The plurality of interaction inputs from a participant may comprise data that quantifies, describes or provides an indication as to the focus the participant on the meeting or presentation. Example interaction inputs are described in further detail below with reference to FIG. 5.

At operation 33, the module 10 determines, for each time period, one or more participants to allocate to a non-focus group based, at least partially, on one or more of the plurality of interaction inputs. Each of the plurality of time periods may represent a predetermined period of time (segmentation) of the virtual meeting or presentation. For example, the predetermined time may be two minutes, five minutes, or ten minutes. Although many variations are possible. The time period may be regarded to represent, for example, a time slice of the virtual meeting or presentation.

Participants to allocate to a non-focus group may be determined for at least one of the time periods of the virtual meeting or presentation. Preferably, the participants to allocate to a non-focus group are determined for each of the time periods of the virtual meeting or presentation. The non-focus group includes a sub-set of participants of the plurality of participants of the virtual meeting or presentation. The participants of the non-focus group represent participants that are determined to have a low likelihood or probability of needing to contribute to, or interact with, the virtual meeting or presentation. This determination is based, at least partially, on one or more of the plurality of interaction inputs received from one or more of the participants. This may be regarded as a period of non-focus time (non-focus period) for the participant.

At operation 34, the module 10 provides each of the one or more participants of the non-focus group with the personalised To-Do list for that participant.

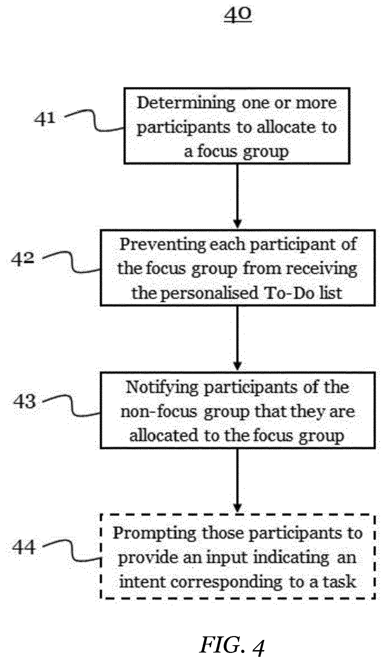

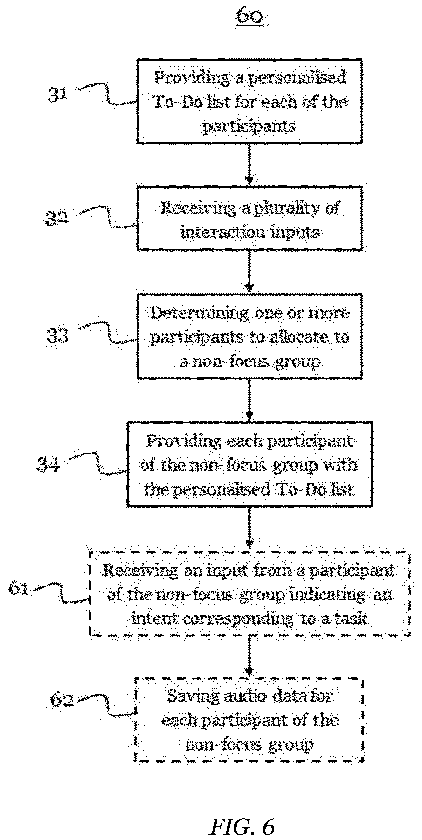

FIG. 4 is a flow chart of an algorithm, indicated generally by a reference numeral 40, in accordance with an embodiment of the system 100. The algorithm 40 comprises operations 31, 32, 33 and 34 as described above with reference to FIG. 3. As discussed below, operations 41 and 42 may be optionally performed in addition to the operations 31, 32, 33 and 34. Operation 43 may be optionally performed in addition to operations 31, 32, 33, 34, 41 and 42. Operation 44 is described in further detail below with reference to FIG. 6.

At operation 41, the module 10 may determine, for each time period, one or more participants of the virtual meeting or presentation to allocate to a focus group based, at least partially, on one or more of the plurality of interaction inputs. The time periods correspond to those described above with respect to FIG. 3 (operation 32). The participants of the focus group represent participants that are determined to be actively contributing to the virtual meeting or presentation and/or have a high likelihood or probability of needing to contribute to, or interact with, the virtual meeting or presentation. This determination is based, at least partially, on one or more of the plurality of interaction inputs received from one or more of the participants. This may be regarded as a period of focus time (focus period) for the participant.

At operation 42, the module 10 may prevent the one or more participants of the focus group from receiving the personalised To-Do list. For each time period, the participants of the focus group are and/or soon will be contributing to the meeting. In order to contribute effectively, it is important that the participants are focused on the meeting. To try and prevent negative multi-tasking of participants that are or should be contributing to the meeting, the personalised To-Do list is not sent to participants of the focus group. This may allow for effective utilisation of participants during focus periods and further increase the overall productivity of a team and/or project(s).

At operation 43, the module 10, for each time period, may determine that one or more participants of the non-focus group is to be allocated to the focus group. The module 10 may then notify the one or more participants that they have been allocated to the focus group. The notification may take any suitable form. For example, the notification may be one or more of an audio, visual or haptic alert or signal. The notification may be, for example, provided in association with the To-Do list, as discussed below.

FIG. 5 is a block diagram of a plurality of interaction inputs, indicated generally by the reference numeral 50. As described above, a plurality of interaction inputs is received for one or more of a plurality of time periods of the virtual meeting or presentation from one or more participants. The interaction inputs may include at least one of speaking time of the one or more participants, and body movement of the one or more participants. Various different body movements may be provided. For examples, body movements may include one or more of: eye movement, hand movement, head movement, posture change, and heart rate.

The interaction inputs 50 may comprise one or more of interaction inputs 51, 52, 53, 54, 55 and/or 56. Interaction input 51 may relate to speaking time. For example, if a participant contributes to the meeting by speaking, the amount of time that the participant speaks maybe determined, for example, by voice recognition of audio data and/or facial recognition of video data of the meeting. Interaction inputs 52, 53, 54, and 55 may relate to body movements. For examples interaction inputs 52, 53, 54, and 55 may relate to eye movement, hand movement, head movement and posture change of a participant, respectively. For example, the number and/or frequency of body movements of a participant may be determined. Interaction input 56 may relate to heart rate of a participant. For example, the average, minimum or maximum heart rate of a participant may be determined.

One or more of the interaction inputs may be detected directly by the module 10. In one example, the module 10 may determine audio data of a participant speaking. In another example, the module 10 may determine body movement of a participant. Alternatively or additionally, the module 10 may receive one or more interaction inputs from other devices/apparatuses connected to the module 10. One or more other devices/apparatuses maybe connected to the module via wired or wireless communication. In one example, the participant may be provided with a mobile device and/or wearable device capable of receiving and/or detecting interaction inputs and transmitting interactions inputs to the module 10. The participant may be provided, for example, with a smart watch, smart earbuds, smart glasses or a smart phone. In one examples, a smart phone, for example, may determine audio data of a participant speaking and/or body movement of a participant. In another example, a smart watch, for example, may detect hand movement, changes in posture and heart rate of a participant. In another example, smart glasses may determine eye movement of a participant. This is not exhaustive and various different data may be provided by each of these devices. This is not an exhaustive list and various other devices/apparatuses may be provided.

The interaction inputs 50 of the system 100 are provided by way of example only, and many variants are possible.

The interaction inputs provide indicators as to the behaviour of the participant for each time period. The interaction inputs provide indicators as to whether or not the participant is actively contributing to or likely to contribute to the meeting or if the participant is expressing passive behaviour and is not contributing, or unlikely to contribute, to the meeting. If a participant is not contributing to the meeting then they may be able to contribute in another way. The system 100 may allow the participant to contribute to the meeting in another way by allocating the participant to a non-focus group.

In an embodiment, determining the one or more participants to allocate to the non-focus group is based, at least partially, on whether a number and/or type of the plurality of interaction inputs received for a participant is below a threshold of received interaction inputs for a respective time period. If the number and/or type of the plurality of interaction inputs received for a participant in a time period is below the threshold, the participant is allocated to the non-focus group. Conversely, determining the one or more participants to allocate to the focus group is based, at least partially, on whether a number and/or type of the plurality of interaction inputs received for a participant is equal to or above a threshold. If the number and/or type of the plurality of interaction inputs received for a participant in a time period is equal to or above the threshold, the participant is allocated to the focus group. For example, the threshold may be based on an amount of time that a participant speaks, a total number of eye and/or body movements of a participant and/or a heart rate of the participant (e.g. average or maximum heart rate). In another example, the threshold may be defined to be a frequency of interaction inputs or a percentage of the number of movements of a participant compared to all of the participants.

Machine learning models for determining the focus of a participant with respect to the virtual meeting or presentation may be trained based on natural language processing (NLP) algorithms with various syntactic and semantic features derived from texts (e.g. text obtained by transcribing the audio data using a speech to text application or service). The semantic features may include the actual words or phrases, and the classes of words in terms of their meaning, such as the emotion the words convey. The syntactic features may include properties related to the way the language is meaningfully structured, such as part of speech of the word (noun or adjective). The machine learning models may be trained based on algorithms dealing with dynamic information derived from interaction inputs relating to body movement received during a virtual meeting or presentation. The machine learning models may be trained with generic ground-truth data.

FIG. 6 is a flow chart of an algorithm, indicated generally by a reference numeral 60, in accordance with an embodiment of the system 100. The algorithm 60 comprises operations 20, 21, 22 and 23 as described above with reference to FIG. 3. Operations 61 and/or 62 maybe optionally be performed in addition to the operations 20, 21, 22 and 23, as discussed below.

At operation 61, the module 10 receives an input from at least one of the one or more participants of the non-focus group indicating an intent corresponding to at least one task included in the personalised To-Do list of that participant. For example, the intent includes one or more of: starting a task, pausing a task, and completing a task. The intent may equally well include other suitable intents that provide information relating to the task.

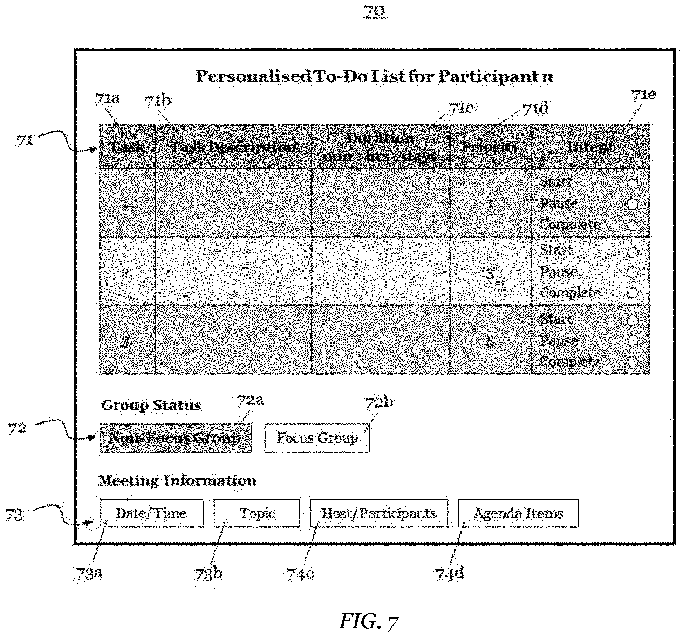

FIG. 7 is a schematic diagram of a display (e.g. a user interface), indicated generally by the reference numeral 70, in accordance with an embodiment. The display 70 shows a number of elements of the personalised To-Do list for a participant allocated to the non-focus group, as described above. The display may include, for example, a number of elements 71 indicating the tasks or action items from the meeting that are associated with the participant. The display may include a number of elements 72 indicating the group to which the participant is currently allocated. The display may also include a number of elements 73 providing general information regarding the meeting and/or agenda items. In one example, one or more of the elements 71 to 73 may be provided to enable participants to enter information during the virtual meeting or presentation. One or more of the elements 71 to 73 may be provided one by one, or may be provided together. Of course, the various elements of the display 70 are provided by way of example only; many variants are possible.

Element 71 may be associated with the personalised To-Do list may include a plurality of elements associated with items of the To-Do list. Element 71a may be provided to identify a task, for example, by number. Element 71b may provide a description of the task (e.g. information or instructions). Element 71c may provide an estimate as to how long the task is expected to take. Element 71d may indicate a priority level assigned to a particular task. Elements 71c and 71d can be provided to rank the tasks according duration and/or priority to allow for effective allocation of tasks during non-focus periods.

Element 71e may include a plurality of input features (interactive elements). The input features in FIG. 7 are by way of example only; many variants are possible. Element 71e may be provided, at operation 61 of the algorithm 60, to enable the participant to enter intent inputs corresponding to at least one task. For example, when the element 71e is provided, the participant may select an input feature (e.g. by clicking, touching, providing a voice input, or any other input), such as a 'start' input, a 'pause' input, or a 'complete' input for a task. In an embodiment, an input feature enabling a participant to enter an intent corresponding to the task may enable the participant allocated to the non-focus group to multi-task effectively during the virtual meeting or presentation. The participant of the non-focus group may use this input feature to start on a task relating to the meeting, whilst direct contribution of the participant to the meeting is not required. When the input feature is provided the participant may report on (update) the status of the task, for example, as being started, paused (i.e. in progress) or complete. The input feature may thereby allow for effective utilisation of participants during non-focus periods and further increase the overall productivity of a team and/or project(s).

Referring back to FIG. 4, operation 44 of the algorithm 40 may be optionally performed in addition to the operations 21, 22, 23, 24, 41, 42, 43, 61 and 62. At operation 44, the module 10 may prompt the one or more participants of the non-focus group allocated to the focus group to provide an input at one of the input features of element 71e indicating that a task is paused or completed. The prompt may include any suitable audio or visual notification or signal; many variants are possible.

Elements 72, for example, may include elements 72a, 72b indicating to which group the participant is allocated (e.g. a non-focus group 72a and a focus group 72b). Referring back to FIG. 4, these elements 72a, 72b may be provided, at operation 43 of the algorithm 40, to notify the participant that they have been allocated to the focus group. The elements 72a, 72b may provide a visual indication that the participant is allocated to the focus group by changing colour or flashing, although many variants are possible. In another example, the elements 72a, 72b may be input features (interactive elements) that a participant can select (e.g. by clicking, touching, providing a voice input, or any other input). For instance, when the participant is notified that they have been allocated to the focus group, the participant may select the element 72b representing the focus group. In response to this input, the module 10 may then remove, hide or otherwise make unavailable the personalised To-Do list for the participant. In another example, if a participant is allocated to the non-focus group but wishes to contribute to the meeting, the participant may select the element 72b representing the focus group. In response to this input, the module 10 may then remove, hide or otherwise make unavailable the personalised To-Do list for the participant.

Referring back to FIG. 6, at operation 62 of the algorithm 60, the module 10 may save audio data of the virtual meeting or presentation for each participant of the non-focus group. Operation 62 may be optionally be performed in addition to, or instead of, operation 61.

Generating and/or saving audio data may require recording the audio, and optionally the video, of the meeting or presentation. The participants may be notified that the meeting or presentation is being recorded. One or more participants (e.g. organizers, hosts, or speakers) of the meeting or presentation may choose not to record the meeting or presentation, or may choose not to record their speaking part of the virtual meeting or presentation. The audio data saved may be adapted according to different types of meetings or presentations or the preferences of one or more participants.

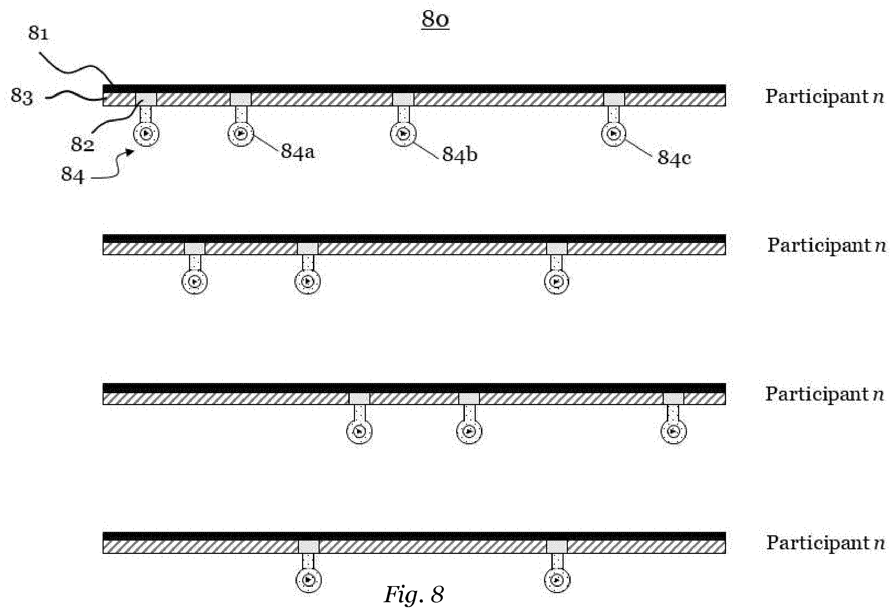

FIG. 8 is a schematic diagram of audio data saved for participants of the virtual meeting or presentation, indicated generally by the reference numeral 80, in accordance with an embodiment. FIG. 8 shows the meeting as a timeline 81 comprising audio data (and optionally video data) for participants of the meeting (e.g. participants 12 to 16). For each participant, FIG. 8 shows, for example, the group to which the participant is allocated for the timeline of the meeting. It is shown whether the participant is allocated to a non-focus group 82 or a focus group 83. When the participant is allocated to the non-focus group, audio data 84 of the virtual meeting or presentation for that participant is saved.

Audio data may be saved for one or more time periods (non-focus time) when a participant is allocated to the non-focus group. The audio data 84 saved for each participant of the non-focus group, for example, may include one or more audio snippets 84a to 84c, representing short audio recordings taken from the whole recording of the virtual meeting or presentation. The number of audio snippets may depend on the number of times the participant is allocated to the non-focus group. The length of the one or more audio snippets may depend on the length of time that a participant is allocated to the non-focus group.

In one example, saving the audio data starts when the participant is allocated to the non-focus group and stops when the participant is allocated to a focus group. In other words, at operation 62 of the algorithm 60, the module 10 may start to save the audio data when the participant is allocated to the non-focus group. The module 10 may stop saving the audio data when the participant is allocated to a focus group. In another example, saving the audio data starts in response to an input from the participant indicating an intent to start a task and stops in response to an input from the participant indicating an intent to pause a task and/or complete a task. In other words, at operation 62 of the algorithm 60, the module 10 may start to save the audio data in response to an input from the participant indicating an intent to start a task. The module 10 may stop saving the audio data in response to an input from the participant indicating an intent to pause a task and/or complete a task. In another example, although not shown in FIG. 7, one or more elements of the personalised To-Do list may be provided to enable the participant to choose to start and/or stop the saving of audio data.

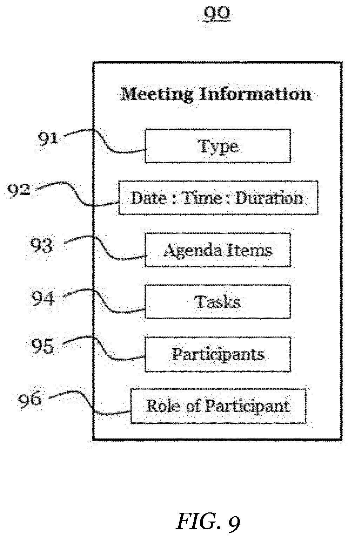

FIG. 9 is a block diagram of meeting information, indicated generally by the reference numeral 90, in accordance with an embodiment. The meeting information may include one or more of: a type of the virtual meeting or presentation; a duration of the virtual meeting or presentation; items of the agenda of the virtual meeting or presentation; tasks and/or participants corresponding to the items of the agenda; and a role of each participant in the virtual meeting or presentation. For example, the type 91 of meeting may relate to the format of the meeting (e.g. the video conferencing tool being used) and/or the style of meeting (e.g. consultation, workshop, team, project). The duration 92 of the meeting includes information on, for example, one or more of the date, time and length that the meeting is scheduled. The agenda 93 of the meeting, for example, includes at least a list of items to be discussed at the meeting. Other information may also be provided. The items may be related, for example, to multiple topics (e.g. different projects or subjects) or to different elements associated with one topic (e.g. different tasks within one project). In addition, tasks 94 and/or participants 95 may be associated with one or more items of the agenda. For example, information on the participants 94 may indicate those that have been invited to the meeting and/or accepted or declined the meeting invitation. The role 96 of the participant may relate to the hosts, organisers and/or speakers of the meeting. This is a non-exhaustive list and many variants are possible.

Referring back to FIG. 3, in accordance with an embodiment, the module 10 may also extract meeting information from an agenda and/or a calendar invitation of the virtual meeting or presentation. The module 10 may, for example, extract the meeting information at any one of operation 31, 32 or 33 of the algorithm 30. In one example, the determining the one or more participants to allocate to the non-focus group is further based on the meeting information. In other words, the module 10 may, in operation 33, additionally determine the one or more participants to allocate to the non-focus group based on the meeting information extracted from the agenda and/or a calendar invitation of the virtual meeting or presentation. In another example, the determining the one or more participants to allocate to the focus group is further based on the meeting information extracted from the agenda and/or a calendar invitation of the virtual meeting or presentation.

The meeting information may further allow the system to determine whether a participant is contributing to or likely to contribute to the meeting for each of the plurality of time periods. The meeting information is used in combination with the interaction inputs. Various rules and/or weightings may be applied to the meeting information and interaction inputs when determining whether to allocate a participant to the non-focus group or the focus group. In an example, if a participant (e.g. participants 12 to 16) is determined to be a host of the meeting, the participant maybe allocated to the focus group and not the non-focus group. In one example, according to a rule, the host participant may be allocated to the focus group for the whole meeting. This allocation may be regardless of the interaction inputs received from the host participant. In another example, if a first participant is determined to be associated with the first item on the agenda and a second participant is determined to be associated with the fifth item on the agenda, the first participant maybe allocated to a focus group and the second participant may be allocated to a non-focus group. If the interaction inputs are set to have a greater weighting than the meeting information, even if the second participant is associated with a fifth item on the agenda, if the interaction inputs indicate that the second participant is speaking and/or moving, the participant maybe contributing to the meeting, such that the second participant is allocated to the focus group and not the non-focus group. Of course, this is by way of example only and various rules and/or weightings may be applied according to the requirements of the system.

Referring back to FIG. 2, the module 10, when the virtual meeting or presentation is finished, may provide to each of the one or more participants a Summary of the virtual meeting or presentation. The Summary is provided (e.g. via email or text message) to the plurality of participants of the virtual meeting or presentation.

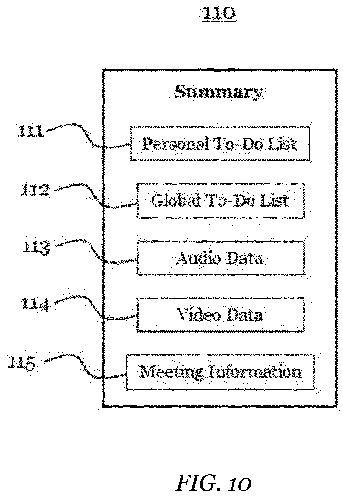

FIG. 10 is a block diagram of the Summary, indicated generally by the reference numeral 110. The Summary 110 includes a personalised To-Do list 111 based, at least partially, on an updated To-Do list for the participant and/or an agenda of the virtual meeting or presentation.

The module 10 may update one or more personalised To-Do lists in response to receiving from the one or more participants of the virtual meeting or presentation inputs indicating tasks that are started, in progress, completed or new tasks. In an example, the module 10 may update the personalised To-Do list of a participant of the non-focus group in response to receiving an input indicating an intent corresponding to at least one task included in the personalised To-Do list. For example, the module 10 may update the personalised To-Do list in response to receiving one or more of an intent to start a task, pause a task and complete a task. In another example, the module 10 may update the personalised To-Do list when the one or more participants of the non-focus group is allocated to the focus group and prompted to provide an input indicating that a task is paused or completed.

In another example, the module 10 may update the personalised To-Do list in response to any editing (e.g. additions, deletions, amendments or inputs) to the To-Do list provided by any one or more of the participants of the meeting. For example, the host of the meeting may edit the To-Do list of one or more participants prior to the meeting and/or based on the outcomes of one or more items on the agenda or the outcomes of the meeting as a whole. The module 10 may update the personalised To-Do list iteratively throughout the meeting and/or at the end of the meeting when providing the Summary.

Referring to FIG. 10, the Summary 110 may further include a global To-Do list 112 for the virtual meeting or presentation based, at least partially, on an updated To-Do list for one or more of the participants and/or an agenda of the virtual meeting or presentation. The global To-Do list may include To-Do lists for all of the participants of the meeting. The global To-Do list may provide an abridged (e.g. shortened or concise) version of the tasks, which may correspond to the outcomes of the meeting for some or all of the participants of the meeting.

For the one or more participants of the non-focus group, the Summary 110 may further include audio data 113. The audio data 113 includes audio data from at least one of the plurality of time periods. In other words, the Summary 110 may further include audio data saved for participants allocated to the non-focus group during the meeting. In another example, the Summary 110 may additionally or alternatively include audio data saved for the whole meeting (e.g. for all of the time periods). For example, if a participant is not allocated to the non-focus group during the meeting, the participant may still want audio data of the meeting. In another example, the Summary 110 may include video data 114 from at least one of the plurality of time periods of the meeting.

The Summary 100 may also include meeting information 115. The meeting information 115 includes information taken (extracted) from an agenda and/or a calendar invitation of the virtual meeting or presentation. The meeting information may be substantially as described about with respect to FIG. 9.

In the Summary, the participant may view a network visualization of the components of the Summary.

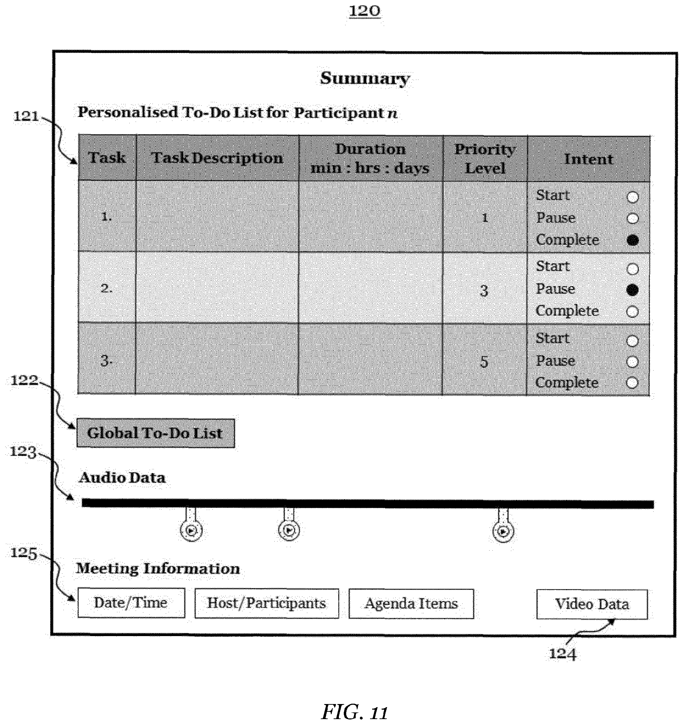

FIG. 11 is a schematic diagram of a display (e.g. a user interface), indicated generally by the reference numeral 120, in accordance with an embodiment. The display 120 shows a number of elements of the Summary 110, including a personalised To-Do list 121, a global To-Do list 122, audio data 123, video data 124 and meeting information 125, associated with the virtual meeting or presentation. One or more of the global To-Do list 122, audio data 123, video data 124 and meeting information 125 may be omitted.

Of course, the various elements of the display 120 are provided by way of example only. Many variants are possible.

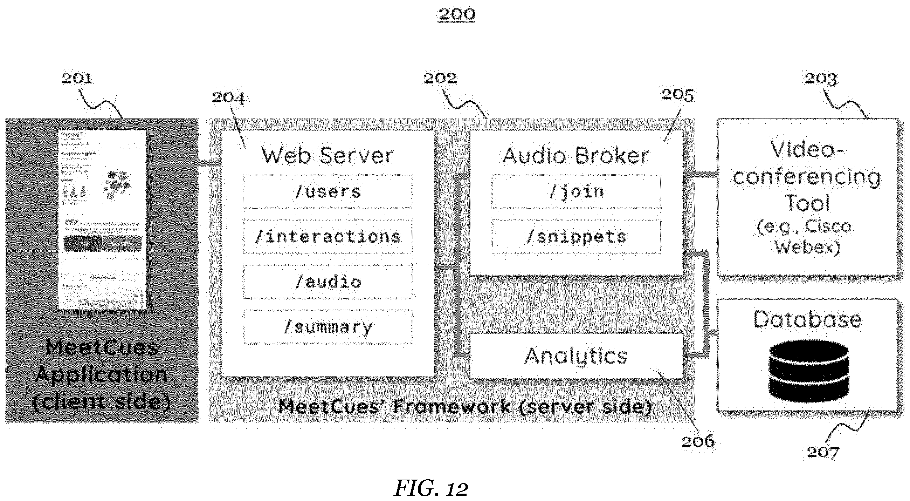

FIG. 12 is a block diagram of a system, indicated generally by the reference numeral 200, in accordance with an example embodiment. System 200 comprises an application layer 201 (e.g. client side), a server side 202 (e.g. server side framework), and a video-conferencing tool 203. The server side framework 202 may comprise a web server 204, an audio broker server 205, an analytics module 206. A database 207 may be provided. The application layer 201 may comprise a user interface, for example, including a summary page of the virtual meeting or presentation, and/or input elements provided to the participants to enable them to enter an intent corresponding to at least one task included in the personalised To-Do list of that participant (e.g. which intents may be displayed and/or used for generating the summary). The web server 204 and audio broker server 205 may be part of a web services layer. The database 207 may be part of a data access layer.

In an example embodiment, the server side 202 may be implemented as a three-tier architecture such that, for example, it may facilitate decoupling of the logic between different services (e.g. web server 204, audio broker server 205, and/or analytics module 206), and may allow scaling up of one or more services if required.

In an example embodiment, the application layer 201 may comprise a user interface that may comprise both visual and interactive features (e.g. implemented using HTML5/Javascript) in a seamless way.

In an example embodiment, the web server 204 may be implemented (e.g. using Python Tornado framework) to run continuously on the server side 202, and may use an application programming interface (e.g. REST API) to handle the communication with the application layer 201. The application programming interface may be used for managing users (/users), store and retrieve inputs (e.g. intent inputs) with the user interface (/intents), and generate summary pages (/audio and /summary). The communication between the user interface and the audio broker server 205 maybe handled through endpoints of the web server 204.

In an example embodiment, the audio broker server 205 may be implemented (e.g. using Python Flask framework) to expose endpoints for recording (/join) and processing (/snippets) audio of the virtual meeting or presentation. The audio maybe retrieved by the audio broker 205 from the video conferencing tool 203. For example, the recording of the audio of the virtual meeting or presentation may be performed using Twilio's communication API3. Twilio's API uses the Session Initiation Protocol (SIP) trunking to join the meeting via a calling-in method. The audio broker server 205 may manage sessions across a plurality of (e.g. all) participants. After a meeting, the audio broker server 205 may store its recordings in the file system. The audio broker server 205 may then process these recordings in the background, and generate analytics in the analytics module 206 by partitioning the recordings into 'audio snippets' which correspond to time periods (e.g. predetermined time slices) of the meeting when a participant is allocated to a non-focus group. The generated audio snippets may then be stored in the database 207, and may be retrievable via the endpoints of the web server 204 and may be provided in the summary page of the application layer 201.

As described above, the example embodiments may be used to complement any existing online communication channels, regardless of how they have been designed.

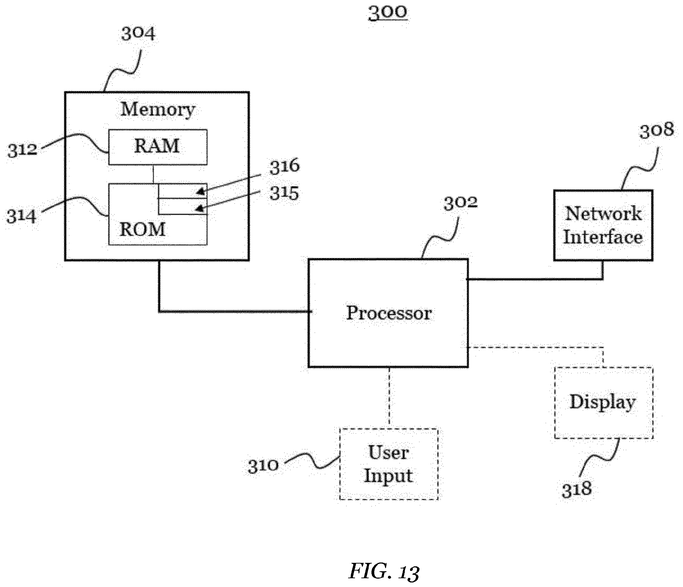

For completeness, FIG. 13 is a block diagram of components of one or more of the example embodiments described previously, which hereafter are referred to generically as a processing system 300. The processing system 300 may, for example, be the apparatus referred to in the claims below. The processing system 300 may have at least one processor and at least one memory including computer program code. The at least one memory and the computer program may be configured, with the at least one processor, to cause the performance of the apparatus.

The processing system may have a processor 302, a memory 304 coupled to the processor 302 and comprised of a RAM 312 and a ROM 314, and, optionally, a user input 310 and a display 318. The processing system 300 may comprise one or more network/apparatus interfaces 308 for connection to a network/apparatus, e.g. a modem which may be wired or wireless. The interface 308 may also operate as a connection to other apparatuses such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The RAM 312 of the memory 304 is used by the processor 302 for the temporary storage of data. The ROM 314 of the memory 304 stores, amongst other things, an operating system 315 and may store software applications 316. The operating system 315 may contain code which, when executed by the processor implements aspects of the algorithms 30, 40, and 60 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside a device/apparatus, such as IoT device/apparatus (i.e. embedded to very small size).

In some example embodiments, the processing system 300 may also be associated with external software applications. These maybe applications stored on a remote server device/apparatus and may run partly or exclusively on the remote server device/apparatus. These applications may be termed cloud-hosted applications. The processing system 300 maybe in communication with the remote server device/apparatus in order to utilize the software application stored there.

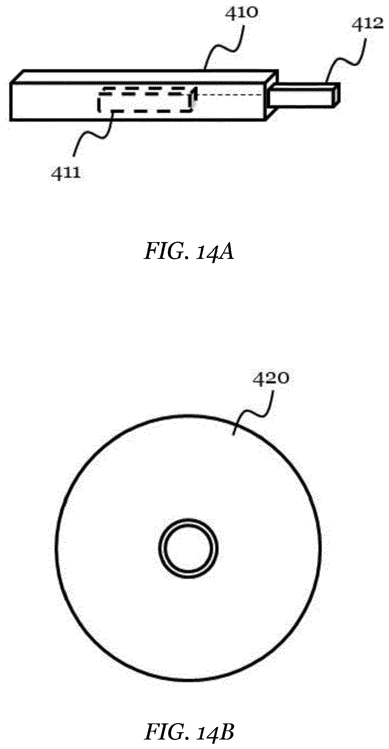

FIGs. 14A and 14B show tangible media, respectively a removable memory unit 410 and a compact disc (CD) 420, storing computer-readable code which when run by a computer may perform methods according to example embodiments described above. The removable memory unit 410 may be a memory stick, e.g. a USB memory stick, having internal memory 411 storing the computer-readable code. The internal memory 411 may be accessed by a computer system via a connector 412. The CD 420 may be a CD-ROM or a DVD or similar. Other forms of tangible storage media may be used.

Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures, such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code, etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagram of FIGS. 3, 4 and 6 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising means for performing:
providing a personalised To-Do list for each of a plurality of participants of a virtual meeting or presentation;
receiving a plurality of interaction inputs for one or more of a plurality of time periods of the virtual meeting or presentation from one or more of the participants of the virtual meeting or presentation;
determining, for each time period, one or more participants to allocate to a non-focus group based, at least partially, on one or more of the plurality of interaction inputs; and
providing each of the one or more participants of the non-focus group with the personalised To-Do list for that participant.

2. The apparatus as claimed in claim 1, further comprising means for performing receiving an input from at least one of the one or more participants of the non-focus group indicating an intent corresponding to at least one task included in the personalised To-Do list of that participant,
wherein the intent includes one or more of: starting a task; pausing a task, and completing a task.

3. The apparatus as claimed in claim 1 or 2, further comprising means for performing saving audio data of the virtual meeting or presentation for each participant of the non-focus group.

4. The apparatus as claimed in claim 3, wherein for each participant of the non-focus group, saving the audio data starts when the participant is allocated to the non-focus group and stops when the participant is allocated to a focus group, or
saving the audio data starts in response to an input from the participant indicating an intent to start a task and stops in response to an input from the participant indicating an intent to pause a task and/or complete a task.

5. The apparatus as claimed in any one of the preceding claims, further comprising means for performing determining, for each time period, one or more participants of the virtual meeting or presentation to allocate to a focus group based, at least partially, on one or more of the plurality of interaction inputs; and
preventing the one or more participants of the focus group from receiving the personalised To-Do list.

6. The apparatus as claimed in any claim 5, wherein for each time period, if it determined that one or more participants of the non-focus group is allocated to the focus group, notifying the one or more participants that they have been allocated to the focus group.

7. The apparatus as claimed in claim 6, when dependent on claim 2, further comprising means for performing prompting the one or more participants of the non-focus group allocated to the focus group to provide an input indicating that the task is paused or completed.

8. The apparatus as claimed in any one of claims 5 to 7, wherein determining the one or more participants to allocate to the focus group is based, at least partially, on whether a number and/or type of the plurality of interaction inputs received for a participant is equal to or above a threshold.

9. The apparatus as claimed in any one of the preceding claims, wherein determining the one or more participants to allocate to the non-focus group is based, at least partially, on whether a number and/or type of the plurality of interaction inputs received for a participant is below a threshold.

10. The apparatus as claimed in any one of the preceding claims, further comprising means for performing, when the virtual meeting or presentation is finished providing, to each of the one or more participants, a summary of the virtual meeting or presentation,
wherein the summary comprises a personalised To-Do list based, at least partially, on an updated To-Do list for the participant and/or an agenda of the virtual meeting or presentation,
optionally, wherein the summary further comprises a global To-Do list for the virtual meeting or presentation based, at least partially, on an updated personalised To-Do list for one or more of the participants and/or an agenda of the virtual meeting or presentation, and
optionally, wherein the apparatus further comprises means for performing updating one or more personalised To-Do lists in response to receiving from the one or more participants of the virtual meeting or presentation inputs indicating tasks that are started, in progress, completed or new tasks.

11. The apparatus as claimed in claim 10, when dependent on claim 3 or 4, wherein, for the one or more participants of the non-focus group, the summary further comprises the audio data,
wherein the audio data comprises audio data from at least one of the plurality of time periods.

12. The apparatus as claimed in any one of the preceding claims, wherein the interaction inputs comprise at least one of:
speaking time of the one or more participants, and
body movement of the one or more participants.

13. The apparatus as claimed in any one of the preceding claims, wherein the apparatus further comprises means for performing extracting meeting information from an agenda and/or a calendar invitation of the virtual meeting or presentation,
wherein determining, for each time period, the one or more participants to allocate to the non-focus group is further based on the meeting information, and
wherein the meeting information comprises one or more of:
a type of the virtual meeting or presentation;
a duration of the virtual meeting or presentation;
items of the agenda of the virtual meeting or presentation;
tasks and/or participants corresponding to the items of the agenda; and
a role of each participant in the virtual meeting or presentation.

14. A method comprising:
providing a personalised To-Do list for each of a plurality of participants of a virtual meeting or presentation;
receiving a plurality of interaction inputs for one or more of a plurality of time periods of the virtual meeting or presentation from the one or more participants of the virtual meeting or presentation;
determining, for each time period, one or more participants to allocate to a non-focus group based, at least partially, on one or more of the plurality of interaction inputs; and
providing each of the one or more participants of the non-focus group with the personalised To-Do list for that participant.

15. A computer program comprising instructions for causing an apparatus to perform at least the following:
providing a personalised To-Do list for each of a plurality participants of a virtual meeting or presentation;
receiving a plurality of interaction inputs for one or more of a plurality of time periods of the virtual meeting or presentation from the one or more participants of the virtual meeting or presentation;
determining, for each time period, one or more participants to allocate to a non-focus group based, at least partially, on one or more of the plurality of interaction inputs; and
providing each of the one or more participants of the non-focus group with the personalised To-Do list for that participant.
